# EUROPÄISCHE PATENTSCHRIFT

(11) **EP 2 587 097 B1**
(45) Veröffentlichungstag und Bekanntmachung des Hinweises auf die Patenterteilung: **13.08.2014**
(21) Anmeldenummer: 12189240.0
(22) Anmeldetag: 19.10.2012
(51) Int. Cl.: F16H 61/30

(54) **Schaltanordnung für ein Kraftfahrzeuggetriebe**
Gear shift assembly for a motor vehicle transmission system
Agencement de commutation pour boîte de vitesses de véhicule automobile

(30) Priorität: 26.10.2011 DE 102011117486
(43) Veröffentlichungstag der Anmeldung: 01.05.2013
(73) Patentinhaber: GETRAG Getriebe- und Zahnradfabrik Hermann Hagenmeyer GmbH & Cie KG, 74199 Untergruppenbach (DE)
(72) Erfinder: Rühle, Günter, 74369 Löchgau (DE); Trutschel, Ralf, 34311 Naumburg (DE)
(74) Vertreter: Witte, Weller & Partner Patentanwälte mbB

(56) Entgegenhaltungen:
- WO-A1-00/12918
- DE-A1- 19 900 852

## Beschreibung

Die vorliegende Erfindung betrifft eine Schaltanordnung für ein Kraftfahrzeuggetriebe, mit einem Schaltelement, das mit einem Schaltglied wie einer Schaltgabel verbindbar ist oder verbunden ist, mit einem Hydraulikaktuator, mittels dessen das Schaltelement in einer ersten Schaltrichtung und in einer entgegengesetzten zweiten Schaltrichtung bewegbar ist, wobei der Hydraulikaktuator einen doppelt wirkenden Hydraulikzylinder aufweist, der einen ersten Zylinderanschluss und einen zweiten Zylinderanschluss aufweist, und mit einem Hydraulikkreis, der eine Pumpe aufweist und der an dem ersten und dem zweiten Zylinderanschluss angeschlossen ist, wobei die Pumpe mit einem Pumpenantrieb verbunden ist.

Eine derartige Schaltanordnung ist insbesondere zum automatisierten Betätigen von Schaltkupplungen verwendbar, wie sie in Kraftfahrzeuggetrieben verwendbar sind, die nach dem Vorgelegeprinzip aufgebaut sind. Die Schaltkupplungen sind dabei vorzugsweise als Synchron-Schaltkupplungen aufgebaut und es sind in der Regel jeweils zwei Synchron-Schaltkupplungen zu einem Schaltkupplungspaket zusammengefasst, derart, dass die zwei Schaltkupplungen mittels eines Schaltgliedes wie einer Schaltgabel geöffnet und geschlossen werden können, um Gangstufen des Kraftfahrzeuggetriebes ein- und auszulegen.

Bei den Handschaltgetrieben werden die Schaltkupplungen von einem Fahrer mit Muskelkraft betätigt. Bei automatisierten Formen derartiger Kraftfahrzeuggetriebe, wie beispielsweise automatisierte Schaltgetriebe (ASG), Doppelkupplungsgetriebe (DKG) und dergleichen, werden die Schaltkupplungen durch Fremdkraft mittels Aktuatoren betätigt. Die Aktuatoren können nach elektrischen, hydraulischen und pneumatischen Wirkprinzipien arbeiten.

In Kraftfahrzeuggetrieben, wie sie insbesondere in Personenkraftwagen verwendet werden, werden insbesondere Hydraulikaktuatoren und Elektromotoraktuatoren sowie Kombinationen hiervon verwendet.

Elektromotorische Aktuatoren werden häufig in Kombination mit Schaltwalzen verwendet. Diese haben jedoch grundsätzlich den Nachteil einer rein sequentiellen Betätigung.

Weiterhin ist es bekannt, für jedes Schaltkupplungspaket eine Schaltstange vorzusehen, die mittels eines eigenen Aktuators, insbesondere mittels eines doppelt wirkenden Hydraulikzylinders betätigt wird. Bei derartigen Hydraulikaktuatoren ist generell eine Pumpe vorgesehen, die häufig über den Antriebsmotor (Verbrennungsmotor) angetrieben wird und auf ihrer Druckseite einen Leitungsdruck erzeugt. Leitungsdruck wird mittels eines Druckregelventils eingeregelt, das elektromagnetisch angesteuert wird. Derartige Ventile erfordern ein hohes Maß an Sauberkeit bei der Fertigung und bei der Montage solcher Hydraulikkreise. Die erforderlichen Stelldrücke für die Hydraulikaktuatoren werden dabei typischerweise ebenfalls mittels elektromagnetisch angesteuerten Ventilen erzeugt, die in der Regel als Wegeventile ausgebildet sind.

Aufgrund der Tatsache, dass die Pumpe mit dem Antriebsmotor gekoppelt ist, ergibt sich während des Betriebs des Fahrzeugs dauerhaft ein relativ hoher Hilfsenergiebedarf, wohingegen elektromechanische Aktuatoren in der Regel nur dann Hilfsenergie benötigen, wenn tatsächlich ein Schaltvorgang durchzuführen ist.

Ferner ist bei derartigen Systemen das Ein- und Auslegen von Gängen in der Regel nur bei laufendem Antriebsmotor möglich, so dass sich bei modernen Antriebskonzepten (Hybrid-Antriebe) Einschränkungen hinsichtlich der Funktionalität ergeben. Elektromechanische Aktuatoren bauen in der Regel jedoch sehr groß und werden wegen der erforderlichen Übersetzungsgetriebe (Zahnradgetriebe) und der Übertragungsmechanik (Schaltwalze) geometrisch unförmig. Daher ist es schwierig, derartige elektromechanische Aktuatoren in Getriebepackages anzuordnen. Insbesondere bei Antriebssträngen in Längsbauweise ist die Verwendung derartiger Aktuatoren aufgrund der engen Platzverhältnisse häufig nicht möglich.

Anstelle der oben genannten Schaltstangen, die jeweils einem Schaltkupplungspaket zugeordnet sind, sind auch Schaltanordnungen bekannt, die eine oder mehrere Schaltwellen verwenden. Derartige Schaltwellen sind sowohl in einer Schaltrichtung als auch in einer Wählrichtung bewegbar. Bei einer Bewegung in Wählrichtung wird jeweils ein Schaltkupplungspaket angewählt, beispielsweise über Schaltfinger an der Schaltwelle. Aus dem Dokument DE 10 2004 052 804 B3 ist eine Schaltanordnung für ein automatisiertes Stufengetriebe bekannt, die zwei Schaltwellen aufweist. Jede der Schaltwellen ist mittels eines eigenen doppelt wirkenden Hydraulikzylinders in Schaltrichtung (Längsrichtung) bewegbar. Ferner ist für jede Schaltwelle ein Elektromotor zum Verdrehen der Schaltwelle in Wählrichtung vorgesehen. Ferner befasst sich dieses Dokument mit mechanischen Verriegelungseinrichtungen, die jedoch nicht Gegenstand der vorliegenden Anmeldung sind.

Aus dem Dokument DE 10 2008 031 815 A1 ist eine weitere Schaltanordnung bekannt, die eine Schaltwelle aufweist, an der für jedes Schaltkupplungspaket eine Mehrzahl von Mitnehmerfingern angeordnet ist, so dass es möglich ist, das jeweilige Schaltglied und die Schaltwelle in einer Mehrzahl von axialen Relativpositionen miteinander zu koppeln. Bei dieser Schaltanordnung ist sowohl für das Bewegen der Schaltwelle in Schaltrichtung als für das Bewegen der Schaltwelle in Wählrichtung jeweils ein eigener Elektromotor vorgesehen.

Das Dokument DE 10 2010 001069 A1 offenbart eine Schaltanordnung, bei der eine Mehrzahl von doppelt wirkenden Hydraulikzylindern über ein Drehschieberventil und ein Regelventil mit einem Systemdruck verbindbar sind.

Ferner ist es aus dem Dokument DE 10 2004 015756 A1 bekannt, eine Schalteinrichtung mit einem Antrieb aus einer kombinierten elektrohydraulischen Verstelleinrichtung auszustatten, wobei der Elektromotor über eine Spindel auf eine Schaltstange wirkt.

Ferner offenbart das Dokument DE 38 37 777 A1 eine hydraulische Getriebeschaltung klassischer Bauart, bei der mittels einer unidirektionalen Pumpe ein Leitungsdruck für eine komplexe Wegeventilanordnung zur Ansteuerung einer Mehrzahl von Hydraulikzylindern vorgesehen ist.

Schließlich offenbart das Dokument DE 19900852 A1 die Präambel von Anspruch 1 und wird als der nächste Stand der Technik betrachtet.

Vor dem obigen Hintergrund ist es eine Aufgabe der Erfindung, eine verbesserte Schaltanordnung sowie ein verbessertes Kraftfahrzeuggetriebe mit einer derartigen Schaltanordnung anzugeben, wobei die Schaltanordnung einen hohen Wirkungsgrad hat und kompakt baut, so dass sie sich in Kraftfahrzeuggetriebe mit beengten Platzverhältnissen integrieren lässt.

Diese Aufgabe wird bei der eingangs genannten Schaltanordnung dadurch gelöst, dass die Pumpe mit einem Elektromotor als Pumpenantrieb verbunden und als bidirektionale Rotationspumpe ausgebildet ist, die einen ersten Pumpenanschluss aufweist, der direkt mit dem ersten Zylinderanschluss verbunden ist, und die einen zweiten Pumpenanschluss aufweist, der direkt mit dem zweiten Zylinderanschluss verbunden ist, derart, dass das Schaltelement durch Verändern der Drehzahl und/oder der Drehrichtung des Elektromotors bewegbar ist.

Durch die Maßnahme, die Pumpe mit einem Elektromotor als Pumpenantrieb zu verbinden, ist es möglich, die Schaltanordnung unabhängig von einem Antriebsmotor zu betreiben. Daher ist auch die Verwendung in Hybrid-Antriebssträngen möglich. Beispielsweise können Gangwechsel auch bei einem rein elektromotorischen Antriebsmodus durchgeführt werden.

Ferner ist die Pumpe als bidirektionale Rotationspumpe ausgebildet, so dass sie in der einen Drehrichtung den Hydraulikzylinder in der einen Schaltrichtung bewegen kann und in der anderen Drehrichtung den Hydraulikzylinder in der zweiten Schaltrichtung bewegen kann. Hierdurch werden aufwändige Magnetventile eingespart.

Von besonderer Bedeutung ist jedoch, dass die Pumpe mit ihrem ersten Pumpenanschluss direkt mit dem ersten Zylinderanschluss verbunden ist, und mit ihrem zweiten Anschluss direkt mit dem zweiten Zylinderanschluss. Die Schaltanordnung geht folglich von dem Gedanken ab, mittels einer Pumpe und eines Druckregelventils einen Leitungsdruck zu erzeugen, aus dem dann Stelldrücke abgeleitet werden. Vielmehr erzeugt die Pumpe je nach Drehzahl einen Druck, der direkt zum Bewegen eines Kolbens des Hydraulikzylinders verwendbar ist.

Unter einer direkten Verbindung soll vorliegend verstanden werden, dass der Pumpenanschluss und der Zylinderanschluss jeweils über eine ununterbrochene Leitung miteinander verbunden sind, wobei insbesondere kein separates Druckregelventil vorgesehen ist, um den Druck zu regeln. Insbesondere sind keine Schieberventile in dem Hydraulikkreis notwendig. Unter einer direkten Verbindung soll jedoch auch verstanden werden, dass der Pumpenanschluss und der Zylinderanschluss über ein einfaches Rückschlagventil miteinander verbunden sind, wie es nachstehend noch ausgeführt werden wird. Ein Rückschlagventil ist ein einfach aufgebautes Ventil ohne elektromagnetische Ansteuerung, das insbesondere keine hohen Anforderungen hinsichtlich der Sauberkeit bei Fertigung und Montage erfordert.

Der zum Betätigen des Hydraulikzylinders verwendete Hydraulikkreis kann folglich im Wesentlichen ohne komplexe Magnetventile aufgebaut werden, so dass keine hohen Anforderungen hinsichtlich Sauberkeit bei Fertigung und Montage erforderlich sind.

Zum Halten des Hydraulikaktuators in den verschiedenen Schaltstellungen (insbesondere einer Schaltstellung zum Einlegen einer Gangstufe in der ersten Schaltrichtung, einer Schaltstellung zum Einlegen einer Gangstufe in der zweiten Schaltrichtung und ggf. eine dazwischen liegende Neutralstellung) kann eine mechanische Rasteinrichtung vorgesehen sein, die das Schaltelement in den jeweiligen Stellungen hält. Bei dieser Ausführungsform ist es nicht erforderlich, für das Einlegen einer Gangstufe ständig einen Volumenstrom mittels der Pumpe zu erzeugen.

Alternativ ist es jedoch auch möglich, eine Schaltanordnung ohne eine derartige Rasteinrichtung vorzusehen, wobei in diesem Fall sowohl zum Einrichten als auch zum Halten der Schaltstellung ein Druck der Pumpe erforderlich ist.

Der Druck in dem Hydraulikzylinder wird bei der erfindungsgemäßen Schaltanordnung über den von der Pumpe erzeugten Volumenstrom aufgebaut. Der Volumenstrom wiederum wird über die Drehzahl des Elektromotors gesteuert, vorzugsweise in Abhängigkeit von der Temperatur.

Mit einer derartigen Schaltanordnung können eine Stellgenauigkeit und Regeldynamik erzielt werden, die eine ähnliche Güte aufweisen, wie einleitend beschriebene Aktuatoranordnungen.

Vorzugsweise sind in dem Hydraulikkreis Maßnahmen getroffen, um zu gewährleisten, dass der Hydraulikkreis bei Inbetriebnahme sicher entlüftet wird und im Betrieb keine Luft angesaugt wird.

Die Pumpe und der Elektromotor können dabei unabhängig von dem Aufbau des Getriebes flexibel angeordnet werden, so dass die Schaltanordnung auch in Kraftfahrzeuggetrieben mit engen Bauräumen verwendbar ist. Die Pumpe kann dann über Hydraulikleitungen mit dem Hydraulikzylinder verbunden werden, der konstruktiv nahe an dem Schaltelement angeordnet ist.

Unter einem doppelt wirkenden Hydraulikzylinder ist vorliegend sowohl eine Anordnung mit einem Zylinder und einem Kolben zu verstehen, als auch eine Kombination von zwei einfach wirkenden Zylindern, deren Kolben miteinander gekoppelt sind.

Die obige Aufgabe wird ferner gelöst durch ein Kraftfahrzeuggetriebe mit mehreren Gangstufen, von denen wenigstens eine mittels eines Schaltgliedes wie einer Schaltgabel ein- und auslegbar ist, wobei das Schaltglied mit einer Schaltanordnung der oben beschriebenen Art verbunden ist.

Die Aufgabe wird somit vollkommen gelöst.

Von besonderem Vorzug ist es bei einer Ausführungsform, wenn das Schaltelement als Schaltstange ausgebildet ist, die mit einem Schaltglied verbindbar oder verbunden ist.

Bei dieser Ausführungsform ist es möglich, für jede Schaltstange einen eigenen Hydraulikzylinder vorzusehen, wobei es hierbei bevorzugt ist, wenn jedem Hydraulikzylinder eine eigene elektromotorisch angetriebene bidirektionale Rotationspumpe zugeordnet ist. Alternativ ist es möglich, eine einzelne Rotationspumpe über eine Wegeventilanordnung mit den unterschiedlichen Hydraulikzylindern zu verbinden.

Vorteilhaft bei dieser Ausführungsform ist es, dass die einzelnen Schaltkupplungspakete im Wesentlichen unabhängig voneinander betätigbar sind.

Bei einer alternativen Ausführungsform, die vorliegend als besonders bevorzugt angesehen wird, ist das Schaltelement als Schaltwelle ausgebildet, die mit einer Mehrzahl von Schaltgliedern koppelbar ist (beispielsweise über Schaltfinger), wobei der Hydraulikaktuator zum axialen Versetzen oder zum Verdrehen der Schaltwelle ausgebildet ist. Mit anderen Worten ist der Hydraulikaktuator zum Bewegen der Schaltwelle in Schaltrichtung ausgebildet.

Bei dieser Ausführungsform ist es möglich, sämtliche Gangstufen des Kraftfahrzeuggetriebes mittels eines einzelnen Hydraulikaktuators und einer einzelnen elektromotorisch angetriebenen, bidirektionalen Rotationspumpe ein- und auszulegen.

Alternativ ist es möglich, eine Schaltanordnung mit zwei Schaltwellen vorzusehen, denen jeweils ein eigener Hydraulikzylinder und eine eigene Pumpe zugeordnet sind, mit einem Aufbau, wie er beispielsweise in dem Dokument DE 10 2004 052 804 B3 beschrieben ist.

Die Schaltwelle kann dabei ferner ausgebildet sein, wie es in dem Dokument DE 10 2008 031 815 A1 beschrieben ist. Mit anderen Worten kann die Schaltwelle für die Kopplung mit jedem Schaltglied eine Mehrzahl von axial versetzten Schaltnasen bzw. -fingern aufweisen, um die Schaltwelle in einer Mehrzahl von axialen Relativpositionen mit dem jeweiligen Schaltglied zu koppeln.

Diese Ausgestaltung ermöglicht es insbesondere bei einem Doppelkupplungsgetriebe, eine Gangstufe in einem aktiven Teilgetriebe geschaltet zu lassen, während in dem inaktiven Teilgetriebe eine Zielgangstufe eingelegt wird. Generell ist es bei der oben beschriebenen Variante von Vorzug, wenn die Schaltwelle zum Schalten axial versetzt wird. Alternativ ist es jedoch auch möglich, die Schaltwelle zum Bewegen in Schaltrichtung zu verdrehen.

In jedem Fall ist es bevorzugt, wenn zum Bewegen der Schaltwelle in Wählrichtung ein Wählantrieb vorgesehen ist, der dazu eingerichtet ist, die Schaltwelle so zu bewegen, dass sie mit jeweils einem der Schaltglieder gekoppelt ist, wobei der Hydraulikaktuator derart mit der Schaltwelle verbunden ist, dass er das jeweils mit der Schaltwelle gekoppelte Schaltglied in der ersten oder zweiten Schaltrichtung bewegt.

Generell ist es möglich, den Wählantrieb ebenfalls mittels eines Hydraulikzylinders (beispielsweise mittels eines einfach wirkenden oder mittels eines doppelt wirkenden Hydraulikzylinders) zu bewegen. Von besonderem Vorzug ist es jedoch, wenn der Wählantrieb einen elektrischen Antrieb aufweist.

Da die für Wählbewegungen erforderlichen Kräfte nur sehr gering sind, kann der elektrische Wählantrieb ohne aufwändige Übersetzungen realisiert werden, so dass ein derartiger Wählantrieb auch bei engen Bauraumverhältnissen relativ leicht integrierbar ist.

Bei der beanspruchten Ausführungsform sind die Verbindungen zwischen den Pumpenanschlüssen und den Zylinderanschlüssen jeweils über eine Drossel oder Blende mit einem Niederdruckbereich, insbesondere einem Tank, verbunden.

Die Drossel oder die Blende sind vorzugsweise ungesteuerte hydraulische Elemente und dienen dazu, eine vorbestimmte geringe Leckage einzurichten. Hierdurch kann eine Verspannung des Hydrauliksystems vermieden werden.

Besonders bevorzugt ist es ferner, wenn der Druck in der Verbindung zwischen dem jeweiligen Pumpenanschluss und dem jeweiligen Zylinderanschluss gemessen wird. In diesem Fall ist es möglich, den Druck zu regeln. Durch das Bereitstellen einer solchen Drossel oder Blende kann dabei die verwendete Regelstrecke stabilisiert werden.

Es ist ferner vorteilhaft, wenn die Verbindungen zwischen den Pumpenanschlüssen und den Zylinderanschlüssen jeweils über ein als Rückschlagventil ausgebildetes Saugventil mit einem Niederdruckbereich verbunden sind.

Hierdurch kann vermieden werden, dass ein erheblicher Saugunterdruck in der saugseitigen Zylinderkammer entsteht. Der Saugdruck wird dabei über das Saugventil bestimmt, insbesondere begrenzt. Die Vorspannung des Saugventils kann dabei sehr gering sein.

Bei der Ausführungsform, bei der die Verbindungen zwischen den Pumpenanschlüssen und den Zylinderanschlüssen jeweils über eine Drossel oder Blende mit einem Niederdruckbereich verbunden sind, ist es von besonderem Vorteil, wenn diese Verbindungen jeweils über ein als Rückschlagventil ausgebildetes Druckbegrenzungsventil mit der Drossel oder Blende verbunden sind.

Hierdurch ergibt sich unterhalb des Öffnungsdruckes des Druckbegrenzungsventils kein Leckageverlust, so dass der Kolben des Hydraulikzylinders spontan bewegt werden kann.

Ferner ist es insgesamt bevorzugt, wenn die Pumpenanschlüsse jeweils über ein als Rückschlagventil ausgebildetes Schwellenventil mit den jeweiligen Zylinderanschlüssen verbunden sind.

Hierbei kann der Saugbereich der Pumpe jeweils vollständig von der saugseitigen Zylinderkammer entkoppelt werden, so dass in der saugseitigen Zylinderkammer kein Unterdruck entsteht. Da die oben genannten Ventile jeweils als einfache Rückschlagventile ausgebildet sind, die vorzugsweise federvorgespannt sind, ergeben sich bei deren Integration in dem Hydraulikkreis keine erhöhten Anforderungen an die Sauberkeit bei Fertigung und Montage (wie es beispielsweise bei Schieberventilen der Fall wäre).

Ferner können die jeweiligen Vorspannungen der Rückschlagventile relativ gering sein, so dass die hydraulischen Verluste gering sind.

Bei dem Saugventil kann die Federvorspannung beispielsweise 0 N betragen. Die Sperrwirkung kann allein durch das Gewicht der Sperrkugel sowie der darüber befindlichen Flüssigkeitssäule realisiert sein.

Generell ist es möglich, den doppelt wirkenden Hydraulikzylinder mit einem einzelnen Kolben auszustatten, der mit einer Kolbenstange verbunden ist, die wiederum mit dem Schaltelement verbunden ist.

Von besonderem Vorzug ist es, wenn die zwei Zylinderräume des Hydraulikzylinders über eine Drossel oder Blende miteinander verbunden sind.

Hierdurch kann eine bessere Entlüftung realisiert werden.

Zudem ist es bevorzugt, wenn der doppelt wirkende Hydraulikzylinder zwei Kolben aufweist, die über eine Kolbenstange miteinander verbunden sind, die mit dem Schaltelement verbunden ist.

Hierdurch kann die Anbindung des Schaltelementes an die Kolbenstange symmetrisch zu den zwei Kolben erfolgen, so dass sich keine Verspannungen ergeben können. Der doppelt wirkende Hydraulikzylinder ist hier vorzugsweise durch zwei einfach wirkende Zylinder realisiert, die vorzugsweise im Gegentakt arbeiten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische Darstellung eines Kraftfahrzeuggetriebes mit einer ersten Ausführungsform einer nicht erfindungsgemäßen Schaltanordnung;
- Figur 2: eine schematische Darstellung einer weiteren Ausführungsform einer nicht erfindungsgemäßen Schaltanordnung;
- Figur 3: eine schematische Darstellung einer weiteren Ausführungsform einer erfindungsgemäßen Schaltanordnung;
- Figur 4: eine schematische Darstellung einer weiteren Ausführungsform einer erfindungsgemäßen Schaltanordnung;
- Figur 5: eine schematische Darstellung einer weiteren Ausführungsform einer erfindungsgemäßen Schaltanordnung;
- Figur 6: eine schematische Darstellung einer weiteren Ausführungsform einer erfindungsgemäßen Schaltanordnung;
- Figur 7: die Schaltanordnung der Figur 6 bei einer Bewegung des Schaltelementes in der zweiten Schaltrichtung bei einer niedrigen Kolbenkraft;
- Figur 8: die Schaltanordnung der Figur 6 bei einer Bewegung des Kolbens in der zweiten Schaltrichtung bei einer hohen Kolbenkraft; und
- Figur 9: die Schaltanordnung der Figur 6 bei einer Bewegung des Kolbens in der ersten Schaltrichtung bei einer hohen Kolbenkraft.

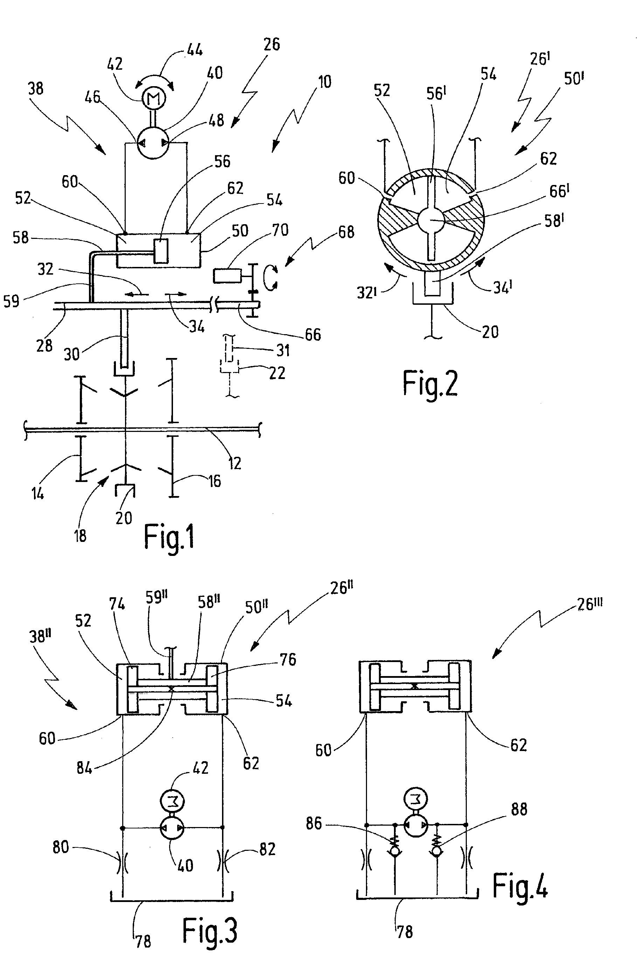

In Fig. 1 ist ein Kraftfahrzeuggetriebe schematisch dargestellt und generell mit 10 bezeichnet.

Das Kraftfahrzeuggetriebe 10 ist in Vorgelegebauweise realisiert und weist eine Welle 12 auf, an der ein erstes Losrad 14 und ein zweites Losrad 16 drehbar gelagert sind.

Zwischen den zwei Losrädern 14, 16 ist ein Schaltkupplungspaket 18 angeordnet, das zwei Synchron-Schaltkupplungen aufweist. Eine Schaltmuffe 20 dient zum Schalten des Schaltkupplungspaketes 18. Das Kraftfahrzeuggetriebe 10 weist ferner eine weitere nicht dargestellte Welle auf, an der zwei Festräder angeordnet sind, die mit den zwei Losrädern 14, 16 in Eingriff stehen, so dass jeweils über ein Losrad und ein Festrad eine Gangstufe realisierbar ist.

Die meisten Kraftfahrzeuggetriebe dieser Art weisen fünf, sechs, sieben oder mehr Gangstufen auf. In entsprechender Weise ist eine weitere Anzahl von Schaltkupplungspaketen in dem Kraftfahrzeuggetriebe 10 vorgesehen, wobei bei 22 schematisch eine weitere Schaltmuffe angedeutet ist.

Zum Betätigen der Schaltmuffe 20 (und ggf. der Schaltmuffe 22 sowie weiterer Schaltmuffen) ist eine Schaltanordnung 26 vorgesehen.

Bei einer Ausführungsform weist die Schaltanordnung 26 eine Schaltstange 28 auf, die mit einer Schaltgabel 30 (oder einer Schaltschwinge) verbindbar oder verbunden ist.

Ggf. weist das Kraftfahrzeuggetriebe 10 noch weitere Schaltgabeln auf, von denen eine schematisch bei 31 gezeigt ist.

Die Schaltstange 28 lässt sich mittels der Schaltanordnung 26 in einer ersten Schaltrichtung 32 zum drehfesten Verbinden der Welle 12 mit dem ersten Losrad 14 bewegen. Ferner lässt sich die Schaltstange 28 mittels der Schaltanordnung 26 in einer zweiten Schaltrichtung 34 zum drehfesten Verbinden der Welle 12 mit dem zweiten Losrad 16 bewegen. In der in Fig. 1 gezeigten Neutralstellung ist die Welle 12 drehmäßig sowohl von dem Losrad 14 als auch von dem Losrad 16 entkoppelt.

Die Schaltanordnung 26 weist einen Hydraulikkreis 38 auf. Der Hydraulikkreis 38 beinhaltet eine bidirektionale Rotationspumpe 40, die mittels eines Elektromotors 42 angetrieben ist. Die Drehrichtung des Elektromotors 42 ist ebenfalls bidirektional in Fig. 1 schematisch bei 44 angedeutet.

Die Pumpe 40 weist einen ersten Pumpenanschluss 46 und einen zweiten Pumpenanschluss 48 auf. Die Pumpenanschlüsse sind je nach Drehrichtung als Druck- oder als Sauganschluss ausgebildet.

Der Hydraulikkreis 38 beinhaltet ferner einen doppelt wirkenden Hydraulikzylinder 50 mit einem ersten Zylinderraum 52 und einem zweiten Zylinderraum 54. Die Zylinderräume 52, 54 sind durch einen Kolben 56 voneinander getrennt. Der Kolben 56 ist mit einer Kolbenstange 58 verbunden, die über ein schematisch angedeutetes Verbindungsglied 59 mit der Schaltstange 28 verbunden ist.

Der Hydraulikzylinder 50 weist ferner einen ersten Zylinderanschluss 60 auf, der mit dem ersten Zylinderraum 52 verbunden ist, und einen zweiten Zylinderanschluss 62, der mit dem zweiten Zylinderraum 54 verbunden ist.

Der erste Pumpenanschluss 46 ist direkt, das heißt ohne Zwischenschaltung von Druckregelventilen oder anderen Schieberventilen, mit dem ersten Zylinderanschluss 60 verbunden. Der zweite Pumpenanschluss 48 ist direkt mit dem zweiten Zylinderanschluss 62 verbunden.

Wenn die Pumpe 40 nicht angetrieben ist, verbleibt die Schaltanordnung 26 in der dargestellten Position. Für die Neutralstellung sowie die beiden Schaltstellungen des Schaltkupplungspaketes 18 kann ggf. eine Rasteinrichtung vorgesehen sein.

Wenn die Pumpe 40 mittels des Elektromotors 42 in einer ersten Drehrichtung bewegt wird, dient der erste Pumpenanschluss 46 als Sauganschluss und der zweite Pumpenanschluss 48 als Druckanschluss. Folglich wird der Kolben 56 in Fig. 1 nach links in der ersten Schaltrichtung 32 bewegt, um die Welle 12 mit dem ersten Losrad 14 drehfest zu verbinden. Zum Lösen dieser Verbindung wird die Drehrichtung der Pumpe umgekehrt, so dass der erste Pumpenanschluss 46 ein Druckanschluss wird und der zweite Pumpenanschluss 48 ein Sauganschluss. Hierdurch wird der Kolben 56 nach rechts bewegt, um das Schaltkupplungspaket 18 entweder in die Neutral-Position oder darüber hinaus in der zweiten Schaltrichtung 34 zu bewegen, um die Welle 12 mit dem zweiten Losrad 16 zu verbinden.

Bei der oben beschriebenen Ausführungsform wird das Schaltglied 30 mittels einer Schaltstange 28 bewegt. Weiteren Schaltgliedern 31 kann dabei jeweils eine eigene Schaltstange zugeordnet sein. In diesem Fall ist es bevorzugt, wenn jeder Schaltstange eine eigene Kombination aus Hydraulikzylinder 50 sowie Pumpe 40 und Elektromotor 42 zugeordnet ist.

In einer alternativen Ausführungsform sind das Schaltglied 30 und weitere Schaltglieder 31 mit einer Schaltwelle 66 verbindbar. Dabei wird die Schaltwelle 66 mittels eines Wählantriebes 68 verdreht, der beispielsweise einen zweiten Elektromotor 70 aufweisen kann. Durch Verdrehen der Schaltwelle 66 wird die Schaltwelle jeweils mit einem der Schaltglieder 30, 31 usw. gekoppelt, um dann mittels der Schaltanordnung 26 das jeweils gekoppelte Schaltglied in Schaltrichtung zu bewegen.

Fig. 2 zeigt eine alternative Ausführungsform, bei der eine Schaltwelle 66' zum Schalten verdreht und zum Wählen axial versetzt wird. Fig. 2 zeigt dabei nur eine alternative Ausführungsform einer Schaltanordnung 26', die zum Verdrehen der Schaltwelle 66' ausgebildet ist. Hierbei ist ein Hydraulikzylinder 50' als doppelt wirkender Drehkolbenzylinder ausgebildet, wobei der Drehkolben 56' mit der Schaltwelle 66' verbunden ist. Die Zylinderräume 52, 54 sind wie bei der Ausführungsform der Fig. 1 mit dem ersten Pumpenanschluss 46 bzw. dem zweiten Pumpenanschluss 48 verbunden.

In den folgenden Fig. 3 bis 6 werden weitere Ausführungsformen von Schaltanordnungen dargestellt, die hinsichtlich Aufbau und Funktion generell der Schaltanordnung 26 der Fig. 1 entsprechen. Gleiche Elemente sind daher durch gleiche Bezugszeichen gekennzeichnet. Im Folgenden werden im Wesentlichen die Unterschiede erläutert.

Bei der Schaltanordnung 26" der Fig. 3 weist der Hydraulikzylinder 50" einen ersten Kolben 74 und einen zweiten Kolben 76 auf. Die zwei Kolben 74, 76 sind über eine Kolbenstange 58" miteinander verbunden. Der doppelt wirkende Zylinder ist hier folglich durch zwei einfach wirkende Zylinder realisiert. Die Kolbenstange 58" ist zwischen den zwei Kolben 74, 76 mit einem Verbindungsglied 59" verbunden, das beispielsweise mit der Schaltwelle 66 verbindbar ist.

Ferner ist in Fig. 3 gezeigt, dass der Hydraulikkreis eine erste Blende 80 und eine zweite Blende 82 aufweist. Die erste Blende 80 verbindet den ersten Zylinderanschluss 60 mit einem Tank 78. Die zweite Blende 82 verbindet den zweiten Zylinderanschluss 62 mit dem Tank 78.

Demzufolge ergibt sich auf der Druckseite der Pumpe 40 (je nach Drehrichtung) jeweils eine Leckage über die jeweilige Blende 80, 82 hin zum Tank 78, wodurch die Regelbarkeit sowie das Ansprechverhalten verbessert werden können. Auch können hierdurch Verspannungen des Hydraulikkreises 38" vermieden werden. Dabei saugt die Pumpe 40 auf ihrer jeweiligen Saugseite Hydraulikfluid nicht nur über den saugseitigen Zylinderraum an, sondern auch über die jeweilige Blende 82. Ferner ist in dem Hydraulikzylinder 50" vorzugsweise eine weitere Blende 84 integriert, die die Zylinderräume 52, 54 miteinander verbindet. Hierdurch kann die Entlüftung des Hydraulikkreises 38" verbessert werden.

In Fig. 4 ist eine weitere Schaltanordnung 26'" gezeigt, die hinsichtlich Aufbau und Funktion generell der Schaltanordnung 26" der Fig. 3 entspricht. Zusätzlich ist hierbei der erste Zylinderanschluss 60 (bzw. die Verbindung zwischen erstem Zylinderanschluss 60 und dem zugeordneten Pumpenanschluss) über ein erstes Saugventil 86 mit dem Tank 78 verbunden. In entsprechende Weise ist der zweite Zylinderanschluss 62 (bzw. die Verbindung zwischen diesem und dem zugeordneten Pumpenanschluss) über ein zweites Saugventil 88 mit dem Tank 78 verbunden. Die Saugventile 86, 88 sind als Druckbegrenzungsventile ausgebildet, derart, dass ab einem gewissen Unterdruck auf der Saugseite der Pumpe 40 Hydraulikfluid direkt aus dem Tank 78 angesaugt wird. Auf der jeweils aktuellen Druckseite der Pumpe 40 sperrt das Saugventil. Die Federvorspannung der Saugventile 86, 88 kann dabei sehr gering sein, beispielsweise mit einer Federkraft von 0 N. Hierdurch kann der Saugunterdruck in dem saugseitigen Zylinderraum verringert werden.

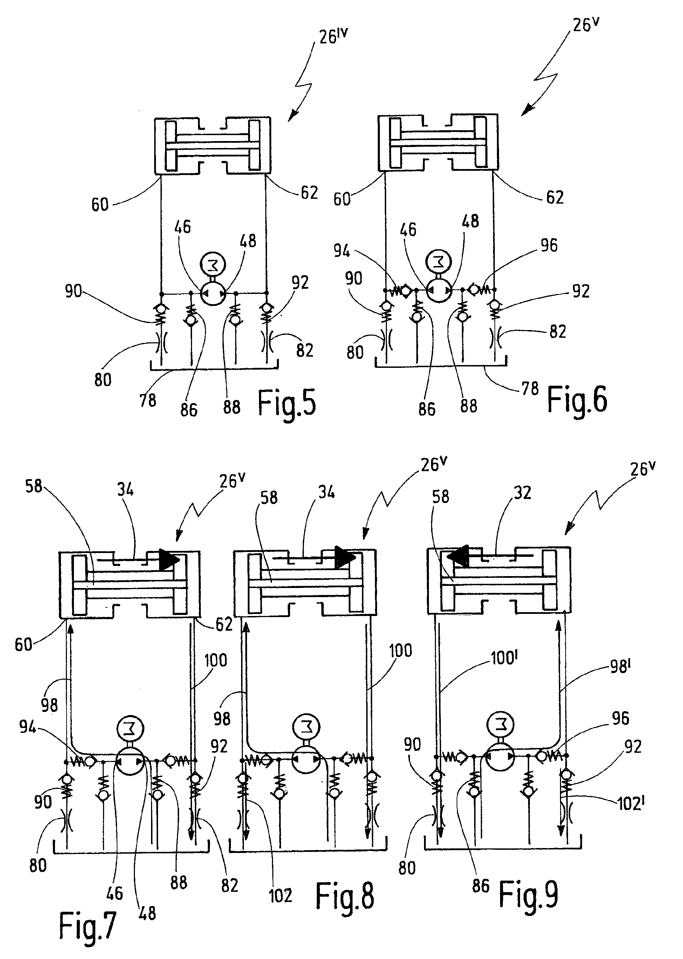

In Fig. 5 ist eine weitere Ausführungsform einer Schaltanordnung 26^{IV} gezeigt, die hinsichtlich Aufbau und Funktionsweise generell der Schaltanordnung 26'" der Fig. 4 entspricht.

Zusätzlich hierzu ist die Verbindung zwischen dem ersten Pumpenanschluss 46 und dem ersten Zylinderanschluss 60 über ein erstes Druckbegrenzungsventil 90 mit der ersten Blende 80 verbunden. In entsprechender Weise ist die Verbindung zwischen dem zweiten Pumpenanschluss 48 und dem zweiten Zylinderanschluss 62 über ein zweites Druckbegrenzungsventil 92 mit der zweiten Blende 82 verbunden.

Durch die als Rückschlagventile ausgebildeten Druckbegrenzungsventile 90, 92 kommt die Wirkung der Blenden 80, 82 erst oberhalb eines bestimmten Druckes zur Entfaltung. Damit ergibt sich unterhalb des Öffnungsdruckes der Druckbegrenzungsventile 90, 92 kein Leckageverlust, so dass auch schnelle und feinfühlige Bewegungen der Kolbenstange 58 erzielbar sind.

Dabei wird in dem saugseitigen Zylinderraum stets ein Gegendruck erzeugt, so dass sich in dem druckseitigen Zylinderraum ein höherer Druckbedarf ergibt.

In Fig. 6 ist eine weitere Ausführungsform einer Schaltanordnung 26^{V} gezeigt, die hinsichtlich Aufbau und Funktionsweise generell der Schaltanordnung 26^{IV} der Fig. 5 entspricht. Zusätzlich ist hierbei zwischen dem ersten Pumpenanschluss 46 und dem ersten Zylinderanschluss 60 ein erstes Schwellenventil 94 in Form eines Rückschlagventils angeordnet. In entsprechender Weise ist zwischen dem zweiten Pumpenanschluss 48 und dem zweiten Zylinderanschluss 62 ein zweites Schwellenventil 96 in Form eines Rückschlagventils angeordnet. Die Rückschlagventile 94, 96 sind dabei zwischen den hydraulischen Abgriffen für die Saugventile 86, 88 und den hydraulischen Abgriffen für die Blenden 80, 82 (bzw. die Druckbegrenzungsventile 90, 92) angeordnet. Durch die Schwellenventile 94, 96 wird der Saugbereich der Pumpe 40 vollständig von dem saugseitigen Zylinderraum entkoppelt, so dass in dem saugseitigen Zylinderraum niemals ein Unterdruck entstehen kann. Dabei muss der gesamte saugseitige Volumenstrom aus dem Tank 78 (dem Sumpf) angesaugt werden, und zwar über das jeweilige Saugventil 86, 88.

In den Fig. 7 bis 8 ist die Schaltanordnung 26^{V} jeweils in verschiedenen Betriebszuständen gezeigt.

In Fig. 7 ist ein Zustand gezeigt, bei dem die Kolbenstange 58 nach rechts bewegt wird (in der zweiten Schaltrichtung 34). Hierbei wird der Elektromotor so in Rotation versetzt, dass der erste Pumpenanschluss 45 ein Druckanschluss und der zweite Pumpenanschluss 48 ein Sauganschluss ist. Hydraulikfluid wird dabei aus dem Tank über das zweite Saugventil 88 angesaugt und über das erste Schwellenventil 94 dem ersten Zylinderanschluss 60 zugeführt. Das erste Druckbegrenzungsventil 90 ist dabei noch geschlossen. Mit anderen Worten ist der am ersten Zylinderanschluss 60 aufgebaute Druck noch so gering, dass das erste Druckbegrenzungsventil 90 noch geschlossen ist. Insofern ergibt sich eine Bewegung der Kolbenstange 58 in der zweiten Schaltrichtung 34 mit einer geringen Kraft.

Wenn die Drehzahl des Motors erhöht wird, ergibt sich aus der Druckseite ein höherer Druck, wobei das erste Druckbegrenzungsventil 90 öffnet und eine Leckage über die erste Blende 80 eingerichtet wird, wie es in Fig. 8 gezeigt ist. Durch Erhöhen der Drehzahl des Elektromotors kann der Druck erhöht werden, um die Kolbenstange 58 mit einer hohen Kraft in der zweiten Schaltrichtung 34 zu bewegen.

Fig. 9 zeigt eine der Fig. 8 entsprechende Darstellung der Schaltanordnung 26^{V}, wobei Saugseite und Druckseite der Pumpe vertauscht sind, so dass Fluid über das erste Saugventil 86 angesaugt wird und auf der Druckseite der Pumpe Fluid über das zweite Schwellenventil 96 dem zweiten Zylinderraum (der zweite Zylinderanschluss) zugeführt wird, wobei das zweite Druckbegrenzungsventil 92 geöffnet hat, so dass ein Leckagefluss eingerichtet ist.

In Fig. 7 ist der so eingerichtete Fluidfluss zum Zylinderanschluss 60 mit 98 bezeichnet, wobei der Rückfluss 100 aus dem sich verengenden Zylinderraum über das zweite Druckbegrenzungsventil 92 hin zum Tank 78 erfolgt. Die gleichen Flüsse 98, 100 ergeben sich in Fig. 8, wobei ein zweiter Rückfluss 102 über das erste Druckbegrenzungsventil 90 und die erste Blende 80 zum Tank hin eingerichtet ist. Die entsprechenden Flüsse sind in Fig. 9 mit 98', 100' und 102' bezeichnet.

## Patentansprüche

1. Schaltanordnung (26) für ein Kraftfahrzeuggetriebe (10), mit einem Schaltelement (28; 66), das mit einem Schaltglied (30) wie einer Schaltgabel verbindbar ist oder verbunden ist, mit einem Hydraulikaktuator (50), mittels dessen das Schaltelement (28; 66) in einer ersten Schaltrichtung (32) und in einer entgegengesetzten zweiten Schaltrichtung (34) bewegbar ist, wobei der Hydraulikaktuator einen doppelt wirkenden Hydraulikzylinder (50) aufweist, der einen ersten Zylinderanschluss (60) und einen zweiten Zylinderanschluss (62) aufweist, und mit einem Hydraulikkreis (38), der eine Pumpe (40) aufweist und an den ersten und den zweiten Zylinderanschluss (60, 62) angeschlossen ist, wobei die Pumpe (40) mit einem Pumpenantrieb (42) verbunden ist, wobei die Pumpe (40) mit einem Elektromotor (42) als Pumpenantrieb verbunden und als bidirektionale Rotationspumpe (40) ausgebildet ist, die einen ersten Pumpenanschluss (46) aufweist, der direkt mit dem ersten Zylinderanschluss (60) verbunden ist, und die einen zweiten Pumpenanschluss (48) aufweist, der direkt mit dem zweiten Zylinderanschluss (62) verbunden ist, derart, dass das Schaltelement (28; 66) durch Verändern der Drehzahl und/oder der Drehrichtung des Elektromotors (42) bewegbar ist, **dadurch gekennzeichnet, dass** die Verbindungen zwischen den Pumpenanschlüssen (46, 48) und den Zylinderanschlüssen (60, 62) jeweils über eine Drossel oder Blende (80, 82) mit einem Niederdruckbereich (78) verbunden sind.

2. Schaltanordnung nach Anspruch 1, **dadurch gekennzeichnet, dass** das Schaltelement als Schaltstange (28) ausgebildet ist, die mit dem Schaltglied (30) verbindbar oder verbunden ist.

3. Schaltanordnung nach Anspruch 1, **dadurch gekennzeichnet, dass** das Schaltelement als Schaltwelle (66) ausgebildet ist, die mit einer Mehrzahl von Schaltgliedern (30, 31) koppelbar ist, und wobei der Hydraulikaktuator (50) zum axialen Versetzen oder zum Verdrehen der Schaltwelle (66) ausgebildet ist.,

4. Schaltanordnung nach Anspruch 3, **dadurch gekennzeichnet, dass** ein Wählantrieb (68) dazu eingerichtet ist, die Schaltwelle (66) so zu bewegen, dass sie mit jeweils einem der Schaltglieder (30, 31) gekoppelt ist, und wobei der Hydaulikaktuator (50) derart mit der Schaltwelle (66) verbunden ist, dass der Hydraulikaktuator (50) das jeweils mit der Schaltwelle (66) gekoppelte Schaltglied (30, 31) in der ersten oder der zweiten Schaltrichtung (32, 34) bewegt.

5. Schaltanordnung nach Anspruch 4, **dadurch gekennzeichnet, dass** der Wählantrieb (68) einen elektrischen Antrieb (70) aufweist.

6. Schaltanordnung nach einem der Ansprüche 1 bis 5, **dadurch gekennzeichnet, dass** die Verbindungen zwischen den Pumpenanschlüssen (46, 48) und den Zylinderanschlüssen (60, 62) jeweils über ein als Rückschlagventil ausgebildetes Saugventil (86, 88) mit einem Niederdruckbereich (78) verbunden sind.

7. Schaltanordnung nach einem der Ansprüche 1 bis 6, **dadurch gekennzeichnet, dass** die Verbindungen zwischen den Pumpenanschlüssen (46, 48) und den Zylinderanschlüssen (60, 62) jeweils über ein als Rückschlagventil ausgebildetes Druckbegrenzungsventil (90, 92) mit der Drossel oder Blende (80, 82) verbunden sind.

8. Schaltanordnung nach einem der Ansprüche 1 bis 7, **dadurch gekennzeichnet, dass** die Pumpenanschlüsse (46, 48) jeweils über ein als Rückschlagventil ausgebildetes Schwellenventil (94, 96) mit den jeweiligen Zylinderanschlüssen (60, 62) verbunden sind.

9. Schaltanordnung nach einem der Ansprüche 1 bis 8, **dadurch gekennzeichnet, dass** der doppelt wirkende Hydraulikzylinder zwei Zylinderräume (60, 62) aufweist, die über eine Drossel oder Blende (84) miteinander verbunden sind.

10. Schaltanordnung nach einem der Ansprüche 1 bis 9, **dadurch gekennzeichnet, dass** der doppelt wirkende Hydraulikzylinder zwei Kolben (74, 76) aufweist, die über eine Kolbenstange (58") miteinander verbunden sind, die mit dem Schaltelement (30) verbunden ist.

11. Kraftfahrzeuggetriebe (10) mit mehreren Gangstufen, von denen wenigstens eine mittels eines Schaltgliedes (30) wie einer Schaltgabel ein- und auslegbar ist, wobei das Schaltglied (30) mit einer Schaltanordnung (26) nach einem der Ansprüche 1 bis 10 verbunden ist.

## Claims

1. Shift arrangement (26) for a motor vehicle gearbox (10), having a shift element (28; 66) which can be connected or is connected to a shift member (30) such as a shift fork, having a hydraulic actuator (50) by means of which the shift element (28; 66) can be moved in a first shifting direction (32) and in an opposing second shifting direction (34), wherein the hydraulic actuator comprises a double-acting hydraulic cylinder (50) which has a first cylinder port (60) and a second cylinder port (62), and having a hydraulic circuit (38) which has a pump (40) and is connected to the first and second cylinder ports (60, 62), wherein the pump (40) is connected to a pump drive (42), wherein the pump (40) is connected to an electric motor (42) as a pump drive and is embodied as a bidirectional rotational pump (40) which has a first pump port (46) which is directly connected to the first cylinder port (60), and which has a second pump port (48) which is directly connected to the second cylinder port (62), in such a way that the shift element (28; 66) can be moved by changing the rotational speed and/or the direction of rotation of the electric motor (42),
**characterized in that** the connections between the pump ports (46, 48) and the cylinder ports (60, 62) are each connected to a low-pressure region (78) via a restrictor or orifice (80, 82).

2. Shift arrangement according to Claim 1, **characterized in that** the shift element is embodied as a shift rod (28) which can be connected or is connected to the shift member (30).

3. Shift arrangement according to Claim 1, **characterized in that** the shift element is embodied as a shift shaft (66) which can be coupled to a multiplicity of shift members (30, 31), and wherein the hydraulic actuator (50) is designed to axially move or to rotate the shift shaft (66).

4. Shift arrangement according to Claim 3, **characterized in that** a selector drive (68) is configured to move the shift shaft (66) in such a way that it is coupled to, in each case, one of the shift members (30, 31), and wherein the hydraulic actuator (50) is connected to the shift shaft (66) in such a way that the hydraulic actuator (50) moves the shift member (30, 31), which is respectively coupled to the shift shaft (66), in the first or the second shifting direction (32, 34).

5. Shift arrangement according to Claim 4, **characterized in that** the selector drive (68) has an electric drive (70).

6. Shift arrangement according to one of Claims 1 to 5, **characterized in that** the connections between the pump ports (46, 48) and the cylinder ports (60, 62) are each connected to a low-pressure region (78) via a suction valve (86, 88) which is embodied as a non-return valve.

7. Shift arrangement according to one of Claims 1 to 6, **characterized in that** the connections between the pump ports (46, 48) and the cylinder ports (60, 62) are each connected to the restrictor or orifice (80, 82) via a pressure-limiting valve (90, 92) which is embodied as a non-return valve.

8. Shift arrangement according to one of Claims 1 to 7, **characterized in that** the pump ports (46, 48) are each connected to the respective cylinder ports (60, 62) via a threshold valve (94, 96) which is embodied as a non-return valve.

9. Shift arrangement according to one of Claims 1 to 8, **characterized in that** the double-acting hydraulic cylinder has two cylinder spaces (60, 62) which are connected to one another via a restrictor or orifice (84).

10. Shift arrangement according to one of Claims 1 to 9, **characterized in that** the double-acting hydraulic cylinder has two pistons (74, 76) which are connected to one another via a piston rod (58") which is connected to the shift element (30).

11. Motor vehicle gearbox (10) having a plurality of gear stages, at least one of which can be engaged and disengaged by means of a shift member (30) such as a shift fork, wherein the shift member (30) is connected to a shift arrangement (26) according to one of Claims 1 to 10.

## Revendications

1. Agencement de changement de vitesse (26) pour une boîte de vitesses de véhicule automobile (10), avec un élément de changement de vitesse (28 ; 66), relié ou pouvant être relié à un maillon de changement de vitesse (30), telle une fourche de changement de vitesse, avec un actionneur hydraulique (50) à l'aide duquel l'élément de changement de vitesse (28 ; 66) peut être déplacé dans une première direction de changement de vitesse (32) et dans une seconde direction de changement de vitesse (34) opposée, l'actionneur hydraulique comportant un vérin hydraulique (50) à double action comportant un premier raccord de vérin (60) et un second raccord de vérin (62) et avec un circuit hydraulique (38) comportant une pompe (40) raccordée au premier et au second raccord de vérin (60, 62), la pompe (40) étant reliée à un entraînement de pompe (42), la pompe (40) étant reliée à un moteur électrique (42) prenant la forme d'un entraînement de pompe et réalisée sous la forme d'une pompe à rotation bidirectionnelle (40) comportant un premier raccord de pompe (46) directement relié au premier raccord de vérin (60) et comportant un second raccord de pompe (48) directement relié au second raccord de vérin (62), de telle sorte que l'élément de changement de vitesse (28 ; 66) puisse être déplacé par variation du nombre de tours et/ou du sens de rotation du moteur électrique (42), **caractérisé en ce que** les jonctions entre les raccords de pompe (46, 48) et les raccords de vérin (60, 62) sont respectivement reliées à une zone de basse pression (78) via un étranglement ou obturateur (80, 82).

2. Agencement de changement de vitesse selon la revendication 1, **caractérisé en ce que** l'élément de changement de vitesse prend la forme d'une tringle de changement de vitesse (28) reliée ou pouvant être reliée au maillon de changement de vitesse (30).

3. Agencement de changement de vitesse selon la revendication 1, **caractérisé en ce que** l'élément de changement de vitesse prend la forme d'un arbre de changement de vitesse (66) pouvant être couplé à une pluralité de maillons de changement de vitesse (30, 31) et l'actionneur hydraulique (50) étant conçu pour décaler dans le plan axial marbre de changement de vitesse (66) ou le faire tourner.

4. Agencement de changement de vitesse selon la revendication 3, **caractérisé en ce qu'**un entraînement de sélection de vitesse (68) est conçu pour déplacer l'arbre de changement de vitesse (66) de façon à ce qu'il soit respectivement couplé à un des maillons de changement de vitesse (30, 31) et l'actionneur hydraulique (50) étant relié de telle sorte à l'arbre de changement de vitesse (66) que l'actionneur hydraulique (50) déplace le maillon de changement de vitesse (30, 31) respectivement couplé à l'arbre de changement de vitesse (66) dans la première ou la seconde direction de changement de vitesse (32, 34).

5. Agencement de changement de vitesse selon la revendication 4, **caractérisé en ce que** l'entraînement de sélection de vitesse (68) comporte un entraînement électrique (70).

6. Agencement de changement de vitesse selon l'une quelconque des revendications 1 à 5, **caractérisé en ce que** les jonctions entre les raccords de pompe (46, 48) et les raccords de vérin (60, 62) sont respectivement reliées à une zone de basse pression (78) via une soupape d'aspiration (86, 88) prenant la forme d'une soupape de retenue.

7. Agencement de changement de vitesse selon l'une quelconque des revendications 1 à 6, **caractérisé en ce que** les jonctions entre les raccords de pompe (46, 48) et les raccords de vérin (60, 62) sont respectivement reliées à l'étranglement ou obturateur (80, 82) via une soupape de limitation de pression (90, 92) prenant la forme d'une soupape de retenue.

8. Agencement de changement de vitesse selon l'une quelconque des revendications 1 à 7, **caractérisé en ce que** les raccords de pompe (46, 48) sont respectivement reliés aux raccords de vérin (60, 62) respectifs via une soupape à seuil (94, 96) prenant la forme d'une soupape de retenue.

9. Agencement de changement de vitesse selon l'une quelconque des revendications 1 à 8, **caractérisé en ce que** le vérin hydraulique à double action comporte deux chambres de vérin (60, 62) reliées entre elles via un étranglement ou obturateur (84).

10. Agencement de changement de vitesse selon l'une quelconque des revendications 1 à 9, **caractérisé en ce que** le vérin hydraulique à double action comporte deux pistons (74, 76) reliés entre eux via une tige de piston (58") reliée à l'élément de changement de vitesse (30).

11. Boîte de vitesses de véhicule automobile (10) dotée de plusieurs étages de rapports, parmi lesquels au moins un peut être passé et retiré à l'aide d'un maillon de changement de vitesse (30) prenant par exemple la forme d'une fourche de changement de vitesse, le maillon de changement de vitesse (30) étant relié à un agencement de changement de vitesse (26) selon l'une quelconque des revendications 1 à 10.
